# FASCICULE DE BREVET EUROPEEN

(11) **EP 1 706 284 B1**
(45) Date de publication et mention de la délivrance du brevet: **11.03.2009**
(21) Numéro de dépôt: 05717460.9
(22) Date de dépôt: 20.01.2005
(51) Int. Cl.: B60J 7/04, B60J 5/10

(54) **DISPOSITIF DE FERMETURE POUR VEHICULE POURVU D'UN HAYON ARRIERE ET D'UN TOIT OUVRANT**
SCHLIESSVORRICHTUNG FÜR EIN MIT EINER LUKE UND EINEM SONNENDACH VERSEHENES FAHRZEUG
CLOSING DEVICE FOR A VEHICLE PROVIDED WITH A HATCH AND A SUNROOF

(30) Priorité: 21.01.2004 FR 0400565
(43) Date de publication de la demande: 04.10.2006
(73) Titulaire: Société Européenne de Brevets Automobiles, 75011 Paris 11 (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirieres (FR)
(74) Mandataire: Pichat, Thierry
(86) Numéro de dépôt international: PCT/FR2005/000131
(87) Numéro de publication internationale: WO 2005/080108

(56) Documents cités:
- EP-A- 1 134 104
- WO-A-01/14158
- WO-A-02/096685
- FR-A- 2 797 815
- GB-A- 622 046
- GB-A- 2 264 533
- US-A1- 2002 121 798
- US-B1- 6 386 613
- PATENT ABSTRACTS OF JAPAN vol. 0123, no. 43 (M-741), 14 septembre 1988 (1988-09-14) & JP 63 103732 A (MAZDA MOTOR CORP), 9 mai 1988 (1988-05-09)

## Description

L'invention concerne un dispositif de fermeture d'un véhicule c'est-à-dire un dispositif adapté pour clore sélectivement certaines zones du véhicule, en particulier une ouverture de coffre, de préférence en liaison avec un toit ouvrant.

Plus précisément, il s'agit ici d'un dispositif, comme montré dans le document WO01/14158. comprenant un hayon arrière destiné à ce véhicule, le hayon comprenant un panneau de fermeture ou de dégagement d'une ouverture d'accès au coffre arrière du véhicule et des moyens d'articulation en rotation pour articuler le hayon entre au moins un état fermé et au moins un état ouvert, autour d'un axe de charnière sensiblement horizontal, par rapport au véhicule, tel que donc défini dans le préambule de la revendication 1.

On connaît déjà des véhicules à hayon arrière.

Typiquement, il s'agit de monospaces, de véhicules tout terrain, ou encore de breaks.

Un problème posé concerne la manière d'articuler le hayon par rapport à une partie fixe du véhicule (c'est-à-dire qui est fixe pendant au moins une phase d'ouverture du hayon), en limitant l'espace que nécessite l'ouverture du hayon au-delà de l'arrière du véhicule, lorsque l'on veut ouvrir ou fermer ce hayon.

Un autre problème est de pouvoir potentiellement escamoter une partie supérieure du hayon par rapport à la structure du véhicule lorsque le hayon est monté sur ce véhicule, en pouvant malgré tout articuler le hayon vis-à-vis du véhicule, entre ses positions ouverte et fermée.

Encore un autre problème est de pouvoir potentiellement adopter sur un véhicule à toit ouvrant le principe du hayon basculant autour d'au moins un axe horizontal, en pouvant si nécessaire ouvrir ce toit jusqu'au coffre arrière du véhicule, avec alors éventuellement un espace ouvert jusqu'à la base des vitres latérales.

L'invention propose pour cela que les moyens d'articulation comprennent des bras montés pivotants autour d'au moins un axe situé à l'écart du panneau de hayon, pour s'articuler vis-à-vis de la structure du véhicule et créer une charnière décalée à l'écart du plan général dans lequel s'étend ledit panneau, de telle sorte que, pour s'ouvrir ou se fermer, le panneau de hayon glisse par rapport à la structure du véhicule, en respectant donc l'enseignement de la partie caractérisante de la revendication 1.

En outre, il est conseillé que :
- les bras soient coudés de manière à présenter une convexité tournée vers le bas,
- ces bras soient liés au panneau de hayon en des zones situées dans les trois quart inférieurs dudit panneau, dans une position fermée du hayon dans laquelle le panneau est disposé sensiblement verticalement.

La partie supérieure du hayon n'intervient alors plus en tant que zone porteuse des moyens d'articulation, alors que dans une ouverture typique de hayon arrière, la charnière est "non décalée" et donc située au sommet du hayon (bord supérieur) qui demeure en limite de la structure du véhicule et encadre l'ouverture du coffre, quelle que soit la position du hayon, fermée ou ouverte, totalement ou en partie.

On conseille qu'en outre au moins en regard de la surface qu'occupe ladite partie mobile du hayon dans une position fermée, la partie fixe présente une ouverture à travers laquelle le coffre arrière du véhicule est accessible, lorsque ladite partie mobile est dans une position ouverte.

Ainsi, la zone que dégagera la partie mobile en position ouverte sera utilisable pour charger ou décharger le coffre.

La partie supérieure et la partie inférieure du panneau de hayon seront avantageusement chacune liées aux dits bras d'articulation, lesquels bras seront alors différents pour la partie supérieure et pour la partie inférieure de hayon.

Ainsi, le mouvement des deux parties de hayon pourra être dissocié.

A cet égard, on prévoit d'ailleurs que les bras d'articulation liés à la partie supérieure de hayon et les bras d'articulation liés à la partie inférieure de hayon soient verrouillables entre eux, de manière libérable, pour être déplacés ensemble dans un premier état et pour être déplaçables indépendamment dans un deuxième état.

Ainsi, on pourra notamment commander le mouvement du hayon avec un seul moyen d'actionnement (tel qu'un vérin, en particulier) lié de préférence uniquement au bras (ou groupe de bras) latéraux de la partie supérieure du hayon.

Selon une approche complémentaire ou alternative, toujours pour prendre en considération en particulier le premier problème cité, on prévoit que la partie inférieure du panneau de hayon présente un volume intérieur adapté pour recevoir une partie au moins de la partie supérieure de hayon, à travers une ouverture prévue à cet effet, dans une position escamotée de cette partie supérieure.

Cette solution concourt également à solutionner le second problème cité.

Un autre problème concerne l'encombrement des moyens de manoeuvre du panneau de hayon à l'intérieur du coffre (et plus généralement à l'intérieur du véhicule).

C'est en particulier pour cela que l'on conseille que les bras d'articulation soient sensiblement plats et s'étendent donc chacun sensiblement dans un plan, perpendiculairement au plan général dans lequel s'étend le panneau de hayon.

L'utilisation d'un toit ouvrant est en outre envisagée.

Dans ce cas, on souhaite que les manoeuvres d'ouverture/fermeture de ce toit ouvrant et du hayon soient compatibles et qu'éventuellement l'ouverture de toit se prolonge à l'arrière jusqu'au hayon, avec éventuellement une possibilité d'ouverture maximale jusque vers la base des vitres latérales, comme indiqué ci avant.

Certaines revendications annexées, auxquelles on se reportera, proposent des solutions. Un autre objet de l'invention est de rendre simple, sûr, fiable, précis et avec un coût maîtrisé le mouvement des panneaux mobiles de toit.

Dans ce but, on conseille que l'un au moins de ces panneaux mobiles soient lié à au moins un bras articulé supplémentaire, pour s'articuler par rapport au véhicule suivant un axe sensiblement horizontal entre une position sensiblement horizontale basculée vers le dessus de la partie arrière de l'habitacle et une position escamotée, sensiblement verticale, située vers l'arrière du coffre du véhicule, les panneaux de toit situés côte à côte étant alors en face du hayon arrière extérieur en position fermée (sensiblement verticale).

Outre à un tel dispositif, l'invention s'applique naturellement au véhicule en lui-même, et plus précisément à un véhicule du type à hayon arrière présentant tout ou partie des caractéristiques ci avant.

Sur ce véhicule, un problème complémentaire de certains au moins de ceux qui précèdent concerne la manière de mettre en place avec un minimum d'encombrement les bras d'articulation du hayon, à l'intérieur du véhicule, en particulier pour l'articulation du panneau de hayon.

Pour cela, il est proposé que les bras d'articulation du hayon soient fixés à la structure du véhicule à un niveau situé en dessous de celui de la limite inférieure des vitres latérales du véhicule.

Dans le même but et pour favoriser les manoeuvres d'ouverture et de fermeture souhaitées du hayon (voir premier problème posé), on conseille en outre que les bras d'articulation du hayon soient articulés à la structure du véhicule vers leur extrémité libre, dans une zone située à proximité du haut du dossier des sièges arrière, derrière ce dossier.

Des particularités apparaissent dans les revendications 2 à 11 dont le contenu est ici introduit par référence. On favorisera ainsi un gain de place, une ergonomie de fonctionnement tant du toit ouvrant que du hayon ainsi qu'une protection des éléments ou panneaux de toit, avec un encombrement qui peut être réduit et une fonctionnalité alliée à une esthétique appropriées.

On privilégiera par ailleurs une intégration discrète des bras au véhicule, sans encombrement excessif et sans forme compliquée.

On favorisera aussi une large ouverture du véhicule sur l'extérieur, en l'espèce sur la largeur de son toit ouvrant et, longitudinalement, entre le sommet du.pare-brise et sensiblement la limite haute du panneau de hayon rabattu à l'arrière du coffre.

Encore un autre problème que l'invention aborde concerne la possibilité d'articuler le panneau de hayon de différentes manières, suivant le type d'accès souhaité au coffre et/ou le type de configuration que l'on souhaite donner au véhicule (toit ouvrant fermé, ouvert partiellement, ouvert totalement ...).

Une description encore plus détaillée de l'invention suit, à partir d'exemples non limitatifs et dans lesquels :
Les figures 1, 2, 3, 4 et 5 montrent schématiquement, en coupe longitudinale un mode de réalisation d'une partie de véhicule conforme à l'invention, avec un hayon arrière et un toit ouvrant dans différents états d'ouverture/fermeture,
La figure 6 montre localement l'intérieur du coffre,
La figure 7 montre une variante de réalisation d'une partie supérieure du hayon.

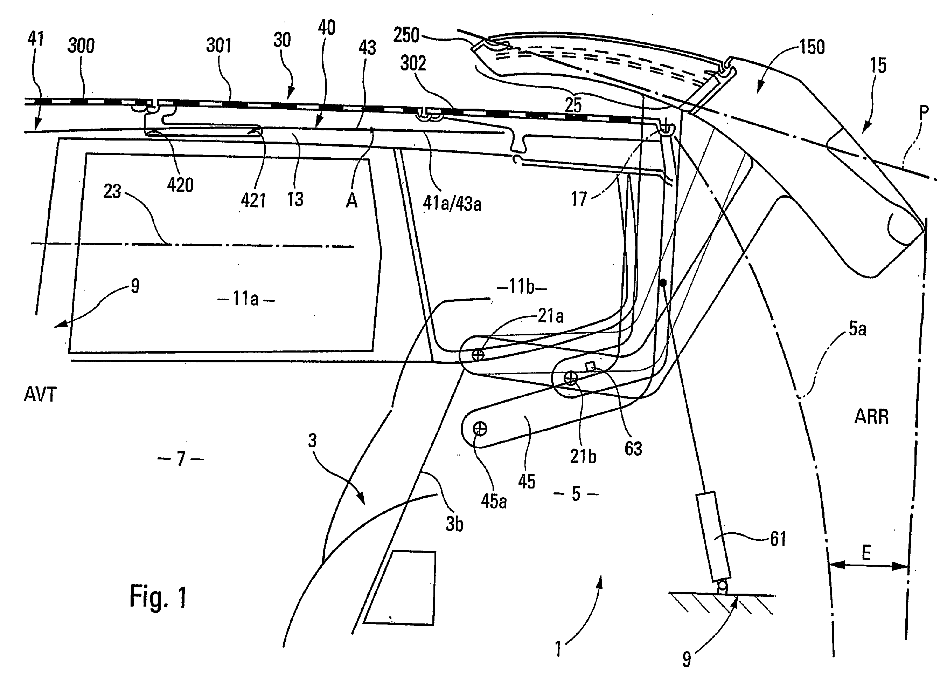

Sur la figure 1 tout d'abord, on voit une partie arrière de véhicule 1 comprenant une banquette (ou rangée de sièges arrière) 3 située juste devant une zone de coffre arrière 5 et constituant en quelque sorte la limite entre ce coffre arrière (en situation normale d'utilisation des sièges, y compris les sièges arrières) et l'habitacle 7.

Les côtés respectivement avant et arrière sont repérés AVT et ARR sur la figure 1 et sont valables sur les autres figures.

Sur les figures, on notera également en repère général 9, la carrosserie ou structure générale du véhicule, en 11a et 11b les vitres latérales arrière et en 13 la partie supérieure sensiblement horizontale du véhicule au niveau de son toit.

Il s'agit ici d'une voiture de type tout terrain "cinq portes" dont l'ouverture 5a d'accès au coffre 5 peut être sélectivement fermée par un hayon basculant 15.

Dans le mode de réalisation illustré sur les figures 1 à 5, le hayon 15 de l'invention n'est pas articulé de "manière traditionnelle" vis-à-vis de la structure 9 du véhicule, c'est-à-dire qu'il n'est pas prévu pour tourner dans son ensemble autour d'un axe a priori fixe situé en 17 au sommet de la zone d'ouverture 5a et s'étendant horizontalement sensiblement à l'intersection du toit 13 et de la partie horizontale de l'encadrement de cette ouverture 5a, comme par exemple dans JP-A-2003 3127667, ou FR-A-2 783 761.

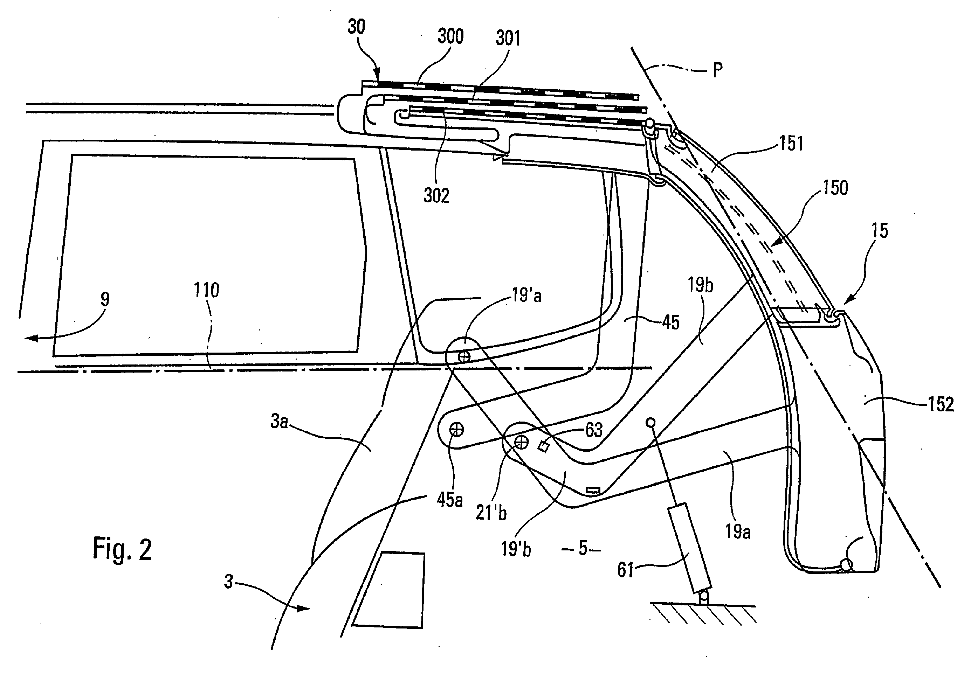

Comme on le voit par comparaison sur les figures 1, 2, 4 et 5, en particulier, ce principe de pivotement traditionnel d'un hayon de coffre est ici remplacé par un hayon glissant, ici basculant au bout de bras 19a, 19b fixés à distance (nettement à l'écart) de l'axe virtuel 17, de manière que dans son état fermé de la figure 2 le hayon 15 obture entièrement l'accès au coffre 5, tandis que dans sa position ouverte de la figure 1, le même hayon libère l'accès 5a, après articulation en rotation des bras 19a, 19b autour de l'axe horizontal 21a, de telle manière que toute la partie supérieure 25 du hayon 15 est basculée vers l'avant du véhicule, au dessus de la zone de bord de toit 13.

On notera que le bras 19a porte l'axe 21b du bras 19b (plus court) qui peut ainsi pivoter par rapport à lui.

Ainsi, pendant l'ouverture du hayon, le bandeau supérieur horizontal 250 du panneau de fermeture 150 s'écarte de la zone de l'axe virtuel horizontal 17.

Comme on l'a certainement déjà compris, on appelle ici "hayon" l'ensemble comprenant un panneau de hayon 150 constitué par toute l'ossature du hayon qui encadre une partie supérieure vitrée 151 et qui forme un large bandeau inférieur plein 152 (à la manière des panneaux traditionnel de hayon par exemple pour break), ce panneau 150 étant relié (a priori fixement) aux bras d'articulation 19a, 19b lesquels s'étendent transversalement au plan général P (voir figure 1 et 2) dans lequel s'étend le panneau.

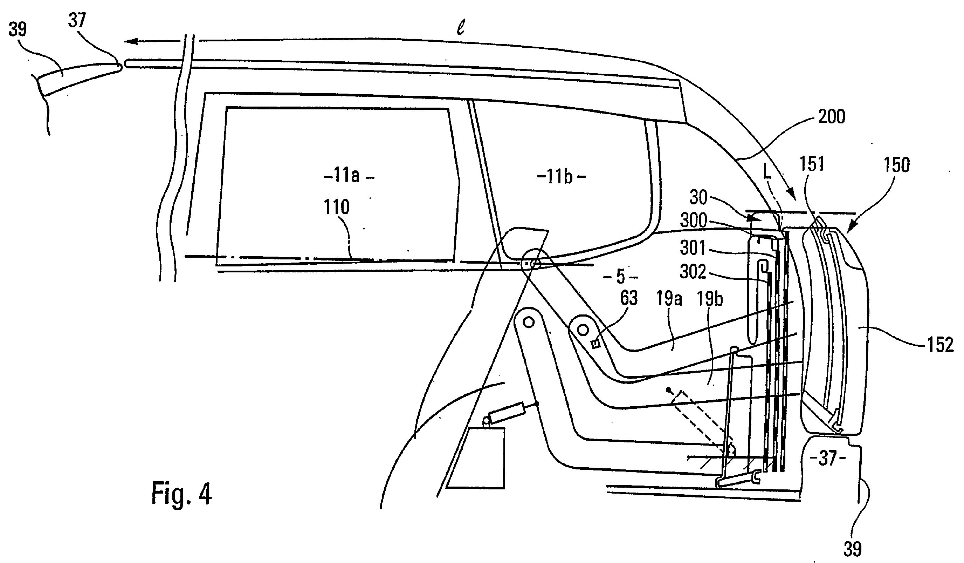

Sur les illustrations des figures 1 à 5, la partie supérieure 151 vitrée et la partie inférieure pleine 152 constituent deux parties de panneau de hayon mobiles l'une par rapport à l'autre, comme on peut le voir en comparant par exemple les figures 2 et 4.

Aussi, pour la manoeuvre du panneau de hayon 150, a-t-on ici prévu deux groupes de bras distincts, 19a et 19b. Mais on pourrait ne prévoir qu'un seul groupe de bras, si le panneau de hayon 150 était monobloc, comme par exemple le seul groupe de bras .19a ou 19b fixé respectivement sensiblement au milieu (19a) ou à proximité de l'extrémité inférieure (19b) du panneau 150.

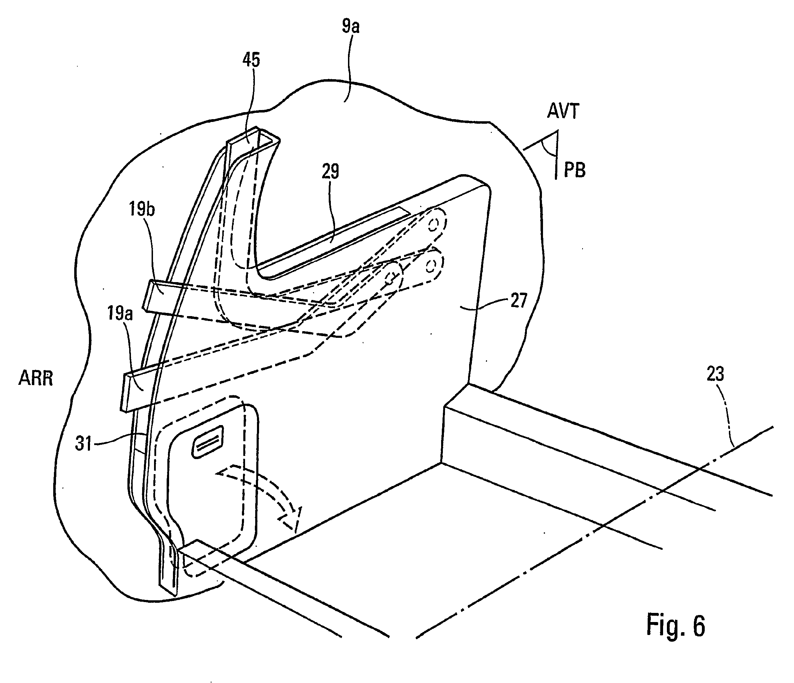

On parle ici d'un "groupe de bras" dans la mesure où l'on considère que chaque bras (tel que 19a ou 19b) est en fait un bras double : un bras de chaque côté latéral du véhicule s'étendant et basculant le long des parties intérieures de carrosserie respectivement gauche et droite du véhicule, près des passages de roues arrière, à l'image de ce que l'on devine sur la figure 6 où, par exemple, le bras gauche 19a s'étend à proximité immédiate de la partie arrière gauche 9a de la carrosserie, la symétrie par rapport à l'axe longitudinal médian 23 du véhicule permettant d'imaginer la disposition de ces mêmes bras le long du côté arrière droit du véhicule.

On aura remarqué que les bras 19a, 19b sont coudé, avec une convexité orienté vers le bas et qu'ils s'étendent sensiblement perpendiculairement au plan P du panneau 150, c'est-à-dire parallèlement à l'axe longitudinal 23 de la carrosserie.

De préférence, ces bras s'étendent en outre (côté gauche ou côté droit du véhicule) chacun dans un plan parallèle à l'axe 23, et ce de façon rapprochée comme on peut le voir sur la figure 6, de manière que d'un même côté les différents bras puissent être camouflés ensemble à l'intérieur d'un cache de protection 27 étroit par exemple plaqué à l'intérieur du coffre, latéralement à proximité immédiate des passages de roues arrière, à gauche ou à droite.

Pour le passage des bras, le cache 27 présente au dessus ou à l'arrière une ou plusieurs fentes, telles que 29, 31.

Pour l'articulation du panneau de hayon 150, les bras 19a, 19b s'étendent nettement à l'intérieur du véhicule, à l'écart de sa carrosserie 9 et sont ainsi articulés à leur extrémité libre (respectivement 19'a, 19'b) à l'intérieur du coffre 5, et préférentiellement à proximité de l'arrière du dossier 3a du siège arrière 3, c'est-à-dire vers l'avant du coffre. En d'autres termes, les bras d'articulation du panneau de hayon 150 ont un longueur a priori supérieure à une vingtaine de centimètres et de préférence supérieure à 30 voir 40 centimètres.

En hauteur, leur fixation est plutôt sur la partie haute du dossier 3a, c'est-à-dire à proximité de la limite inférieure 110 des vitres latérales arrière 11a, 11b (figure 2).

Les axes 21a, 21b d'articulation des bras 19a, 19b sont perpendiculaires à l'axe longitudinal 23.

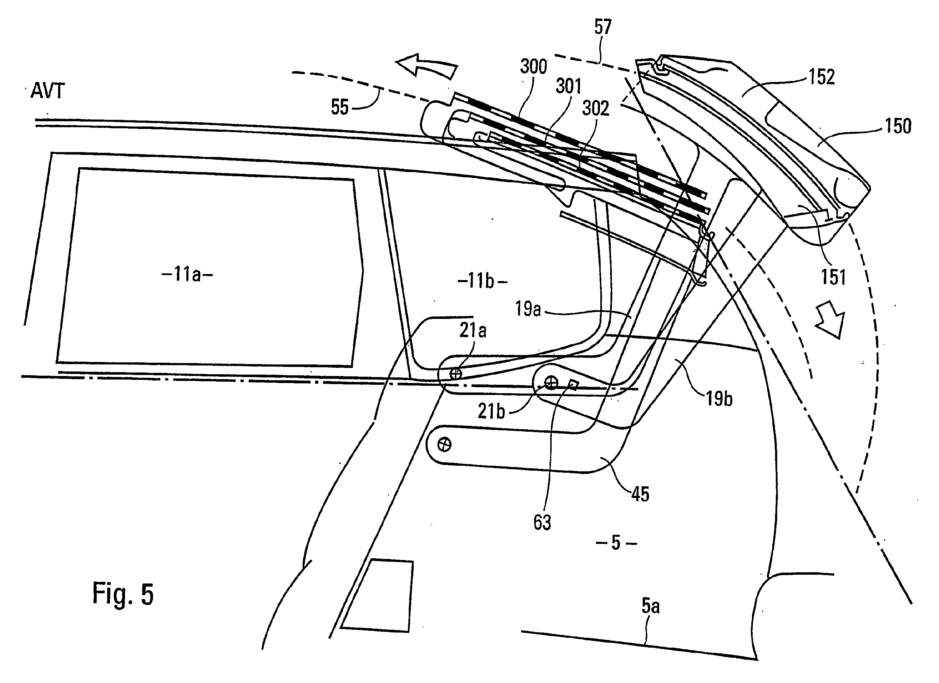

Avec une telle conception, le panneau de hayon 150 peut donc pivoter entre une position fermée (figure 2) où le panneau est sensiblement vertical (plan P légèrement incliné par rapport à la verticale) et une position ouverte comme sur la figure 1 où le plan P est sensiblement horizontal, c'est-à-dire sensiblement parallèle au plan général du toit 13 et situé globalement au dessus de lui, dégageant ainsi un large accès au coffre 5, avec un encombrement axial minimal E dans le sens de la profondeur (axe 23), compte tenu de ce que toute la partie 25 du panneau 150 à basculée par dessus le toit, vers l'avant du véhicule. Pour des raisons de chargement/déchargement, ainsi que d'encombrement (notamment en liaison avec un toit ouvrant comme on va le voir ci-après), on peut prévoir que la partie supérieure 151 du panneau de hayon 150 s'escamote dans la partie inférieur 152 (voir figure 5), ou du moins puisse être déplacée sensiblement au même niveau.

Pour cela, le volume intérieur de la partie extérieurement pleine 152 (élément de carrosserie) est adapté pour recevoir sensiblement dans la direction du plan P la partie supérieure 151.

Dans la version imaginée, la hauteur (sensiblement dans la direction du plan P) de la partie inférieure 152 de hayon est comparable à la hauteur de la partie supérieure 151 qui peut ainsi pratiquement entièrement s'escamoter dans la partie 152 comme on peut le voir notamment sur la figure 4, avec pour avantage que si l'on a prévu un toit ouvrant 30 avec des panneaux 300, 301, 302 superposables de manière télescopique, la limite haute du toit ouvrant 30 en position escamotée, sensiblement verticale, basculée à l'arrière du coffre 5, (comme sur la figure 4) peut arriver sensiblement de niveau avec l'extrémité supérieure du panneau de hayon 150 (avec sa partie supérieure 151 ramenée au niveau de la partie inférieure 152), le panneau 150 étant alors supposé en position fermée, c'est-à-dire disposé sensiblement verticalement à l'arrière du coffre 5, avec sa base en appui sur le bas de caisse transversale 37 de coffre qui borde le bouclier arrière 39.

Ainsi, on libère tout un espace au dessus de la limite L, c'est-à-dire qu'au dessus de leur tête, et à l'arrière jusqu'au coffre, les occupants du véhicule sont directement à l'air libre comme le montre la figure 4, cette situation étant d'autant plus renforcée si la limite L est, en hauteur, proche de la limite inférieure 110 des vitres latérales 11a, 11b, (figure 4).

Concernant le possible toit ouvrant 30, il comprend au moins un élément (ou panneau) de toit avant et au moins un élément (ou panneau) de toit arrière

En l'espèce, l'élément de toit avant est en deux parties : un panneau avant 300 et un panneau intermédiaire 301.

En position fermée du toit ouvrant 30 au-dessus de l'habitacle 7 (comme sur la figure 1), le panneau avant 300 s'étend longitudinalement entre le sommet 37 du pare-brise 39 et, à l'arrière, le panneau intermédiaire 301 lequel s'étend devant le panneau arrière de toit 302.

Ces trois panneaux mobiles 300, 301, 302 du toit ouvrant 30 s'étendent, dans l'état fermé du toit de la figure 1, sensiblement horizontalement de façon coplanaire pour fermer le dessus de l'habitacle au-dessus de la zone 13 de toit, laquelle consiste alors en deux travées latérales sensiblement parallèles à l'axe longitudinal 23 s'étendant sur la longueur de l'habitacle jusqu'au panneau de hayon arrière 15, au-dessus des vitres latérales.

Ces bandeaux structuraux longitudinaux, symétriques à gauche et à droite, portent des glissières de coulissement des panneaux 300, 301 parallèlement à l'axe 23, telles que les glissières 40 (gauche et droite) permettant le déplacement axial desdits panneaux jusqu'à ce qu'ils viennent se superposer comme sur la figure 2, avec de bas en haut, le panneau arrière 302 (qui ne s'est pas déplacé), le panneau intermédiaire 301 et le panneau avant 300.

On connaît déjà dans la technique différents système de coulissement de tels panneaux de toit ouvrant. Plusieurs d'entre eux peuvent être utilisés dans le cadre de la présente invention, pour peu qu'ils permettent la superposition comme sur la figure 2 et que le panneau arrière de toit (302) soit lié (a priori fixement) à un bras basculant 45 articulé en rotation à son extrémité libre (en 45a), suivant un axe horizontal perpendiculaire à l'axe longitudinal 23 et situé à l'intérieur du véhicule.

En l'espèce, l'axe transversal 45a est situé près de l'arrière 3b du dossier de siège arrière 3, près du sommet de ce dossier (moitié supérieure) et donc à proximité des axes de rotation 21a, 21b.

Comme pour les bras 19a, 19b, chacun des bras 45 est situé latéralement (à gauche ou à droite) près des éléments latéraux correspondants de la carrosserie, en s'étendant à l'intérieur du coffre 5, de manière en particulier à pouvoir être logé dans le cache gauche ou droit (tel que 27).

Comme les autres bras, chaque bras 45 est de préférence coudé et s'étend dans un plan parallèle à l'axe longitudinal 23 (voir plan PB du bras 19a, par exemple).

Pour le coulissement des panneaux mobiles de toit ouvrant 300, 3001, chaque glissière latérale 40 comprend deux éléments longitudinaux de glissière 41, 43 parallèles s'étendant sensiblement horizontalement (en fonction de la courbure plus ou moins prononcée du toit) .

Le panneau avant de toit 300 est monté coulissant dans le premier élément de glissière 41 (élément avant), par deux galets 47, 49 respectivement engageables dans deux courbures prononcées (respectivement avant et arrière) 410, 411 de la glissière avant 41, ceci en position fermée du toit ouvrant comme sur la figure 1.

Ce panneau de toit avant 300 est relié aux galets respectivement avant et arrière 47, 49 par un bras coudé 51 fixe vers le bord avant 300a du panneau de toit avant 300.

Le panneau intermédiaire de toit 301 est, de manière comparable, monté coulissant dans le deuxième élément de glissière 43, par l'intermédiaire de deux galets 51, 53, respectivement engageables dans les deux zones courbées 420, 421, dirigées vers le bas, de l'élément de glissière 43, pour venir de niveau avec les éléments 300, 302 en position fermée des éléments de toit (idem pour 410/411 vis-à-vis de l'élément de toit 300) .

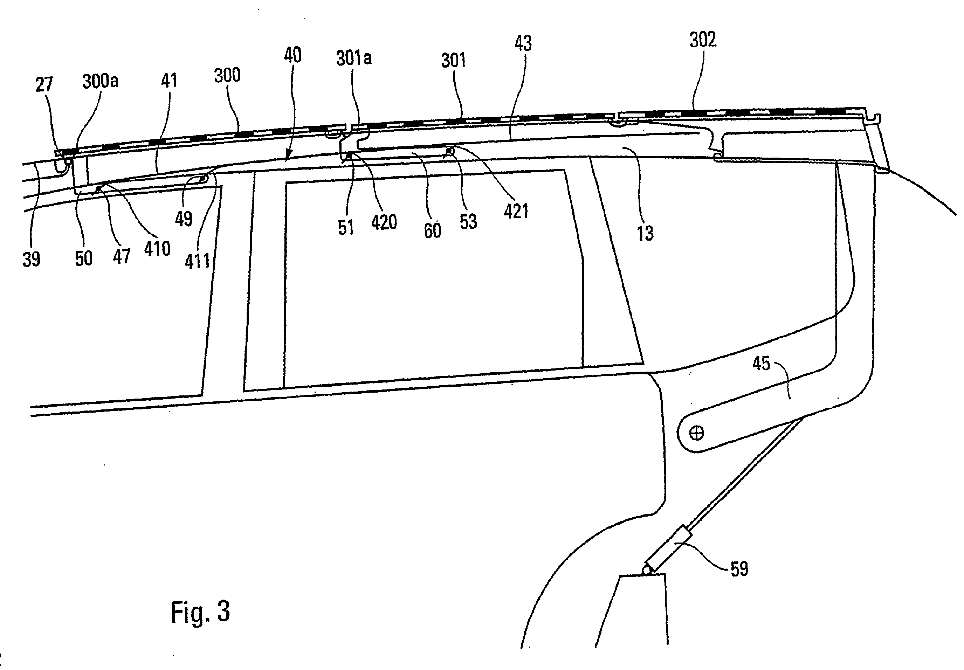

Ce panneau 301 est relié aux galets 51, 53 par un bras coudé 60 fixé vers le bord avant 301a du panneau 301 (voir figure 3) .

L'élément de glissière 43 s'étend parallèlement à l'élément 41 et chacun d'eux comprend une partie fixe (avant) liée à l'un ou l'autre des bandeaux latéraux 13 de la structure du véhicule et une partie arrière (41a,43a) mobile s'étendant jusque sous le panneau 302 et qui pivote avec ce panneau de toit, via les bras 45.

Figure 1, on a repéré A la limite des parties mobiles 41a,43a, longitudinalement, parties que l'on voit confondues sur la figure (vue de côté).

Quant au panneau arrière 302 de toit ouvrant, il est donc monté pivotant par rapport à la structure du véhicule par l'intermédiaire des bras 45 et entraîne, verrouillés alors à lui, les panneaux 300,301.

Pour s'ouvrir ou se fermer sensiblement horizontalement entre les états des figures 1 et 2, les panneaux de toit ouvrant 300 et 301 coulissent le long de leurs éléments de glissières respectifs 41 et 43.

Parvenu dans la position de la figure 2 avec les éléments de toit 300, 301, 302 superposés et disposés à l'arrière de l'habitacle, sensiblement au dessus du coffre arrière 5, ces éléments (alors verrouillés ensemble par un verrou débrayable non représenté) peuvent pivoter ensemble par l'intermédiaire du bras 45, comme le montre la figure 5, la conformation de cet ensemble, du panneau de hayon 150 et des bras 19a, 19b 45 étant adaptée pour que l'ensemble de toit 300, 301, 302 pivote par rapport à la structure du véhicule entre sa position sensiblement horizontale haute de la figure 2 et une position escamotée sensiblement verticale, comme sur la figure 4, où les éléments de toit 300, 301, 302 situés côte à côte sont disposés sensiblement verticalement à l'arrière du coffre 5.

Comme on le voit sur les figures 4 et 5, l'arc 55 de pivotement/déplacement des panneaux de toit 300, 301, 302 est, par rapport au véhicule, situé plus à l'intérieur que l'arc 57 de pivotement/déplacement du panneau de hayon 150, de sorte que par exemple en position verticale escamotée de la figure 4, les panneaux de toit côte à côte 300, 301, 302 sont interposés entre l'arrière du coffre 5 et le panneau de hayon 150, lui-même disposé sensiblement verticalement, avec donc sa partie supérieure 151 au niveau de la partie inférieure 152.

Si l'on souhaite dégager plus largement la zone d'accès au coffre 5 que sur la figure 4 où le coffre n'est accessible que par le haut (en 200), au-dessus du panneau 152 et des éléments de toit 300, 301, 302, on peut faire basculer vers le haut et vers l'avant du véhicule tant l'ensemble du panneau de hayon 150 que les panneaux de toit ouvrant 300, 301, 302, comme le montre la flèche sur la figure 5, par pivotement des bras 19a, 19b, 45. Le coffre 5 est alors accessible depuis sensiblement son plancher 5a jusque par exemple, en limite supérieure, la base des vitres latérales 11a, 11b, voire plus haut (figure 5).

Pour cette opération, on peut utiliser exclusivement un premier vérin 59 relié à l'un des bras 45 (figure 3) et un deuxième vérin 61 relié à l'un des bras 19a ou 19b.

Si le vérin unique (un par côté de préférence) pour la manoeuvre des bras 19a,19b est le vérin 61, alors on le relie à l'un des bras latéraux 19b, permettant ainsi son articulation autour soit de 21b (articulation de la partie supérieure de hayon 151) soit de 21a (articulation de l'ensemble du hayon 15).

Pour la manoeuvre commune des bras 19a, 19b et donc du panneau de hayon 150 dans un état donné (escamoté ou non) de ces parties supérieure 151 et inférieure 152, les bras 19a, 19b sont verrouillables par un dispositif de verrouillage schématisé en 63 pour pivoter ensemble.

A cet égard, plusieurs positions angulaires peuvent être déterminées, pour un pivotement commun.

Sur la figure 5, lés deux bras 19a, 19b pivotent ensemble (dispositif d'interverrouillage 63 activé dans une première position angulaire) et l'écart angulaire entre les deux bras est faible, (partie supérieure 151 escamotée dans la partie inférieure 152).

Par contre, pour.passer de la position fermée de la figure 2 à la position ouverte de la figure 1, les parties supérieure et inférieure du panneau de hayon 150 ont là encore pivoté ensemble avec le dispositif d'interverrouillage 63 alors activé dans une seconde position angulaire des bras, en respectant un écart angulaire plus important que dans le cas précédent.

Dans tous les cas, on comprend que le déplacement peut être assuré donc par un système d'entraînement unique, commun, tel que le vérin 61.

Bien entendu, pour escamoter ou sortir la partie supérieure de hayon 151 vis-à-vis de sa partie inférieure 152, le dispositif d'interverrouillage 63 est désactivé, permettant la libre articulation relative des bras 19a et 19b et l'évolution entre les états des figures 4 et 5 et celui des figures 1 et 2.

Le dispositif de verrouillage débrayable 63 peut consister en un système mécanique ou par exemple électromécanique avec par exemple un verrou commandé électriquement, à partir du tableau de bord, par le conducteur.

Si l'on considère que le panneau de hayon arrière 150 comprend ses parties supérieure et inférieure 151, 152 mobiles l'une par rapport à l'autre comme déjà indiqué, on peut alors en quelque sorte considérer que la partie supérieure escamotable 151 appartient au toit ouvrant 30 en ce qu'il prolonge les panneaux de toit 300, 301, 302, dans leur continuité, de sorte que le toit ouvrant (qui comprend alors le panneau 151) s'étend depuis l'avant du véhicule (dans l'exemple depuis la traverse de bais de pare-brise 37) jusqu'au panneau de hayon 152 qui, à la différence du panneau 151 (vitré), est plein puisqu'il s'agit d'un élément mobile de la carrosserie, à l'image de la partie basse des portes latérales dont le véhicule est bien entendu également pourvu.

Dans cette approche, on peut donc obtenir un véhicule à très grand toit découvrable pouvant évoluer entre la position extrême de toit et hayon fermés et la position "toit totalement ouvert" de la figure 4.

Suivant cette approche, on peut donc alors considérer que l'on a affaire à un véhicule découvrable à toit ouvrant comprenant plusieurs panneaux de toit 300, 301, 302, 151 mobiles les uns par rapport aux autres et par rapport à la structure 9 du véhicule entre une position de fermeture dans laquelle les panneaux 300, 301, 302 s'étendent au dessus de l'habitacle qu'ils ferment en partie supérieure, et une position ouverte atteinte par basculement de ces panneaux de toit 300, 301, 302 vers l'arrière du véhicule, position dans laquelle lesdits panneaux découvrent l'habitacle.

A cela s'ajoute que le véhicule comprend alors en outre un hayon arrière 150 mobile entre une position ouverte (voir figures 1 et 4) dans laquelle il autorise l'accès au coffre 5 et une position fermée dans laquelle il recouvre cet accès, les panneaux de toit comprenant alors, en quelque sorte :
- un premier groupe de panneaux de toit 300, 301, 302 déplaçables entre ladite position de fermeture (panneaux disposés les uns derrières les autres) et ladite position ouverte dans laquelle, ces panneaux du premier groupe 300, 301, 302 sont sensiblement côte à côte, (« superposés » les uns aux autres) et disposés sensiblement verticalement à l'arrière du coffre arrière 5 (figure 4),
- et un second groupe de panneaux de toit comprenant au moins un panneau 151, lié fonctionnellement au hayon 150 et définissant donc un panneau supérieur pour ce hayon, lequel comprend au moins deux parties mobiles l'une par rapport à l'autre, incluant ledit panneau supérieur 151 et un panneau inférieur 152.

Dans ce cas, les deux panneaux supérieur et inférieur de hayon (151, 152) sont donc mobiles avec le hayon entre sa dite position fermée (figure 2) dans laquelle les panneaux 151, 152 sont déployés l'un à la suite de l'autre, dans la continuité des panneaux de toit du premier groupe (300, 301, 302), lorsque ceux-ci sont en position fermée (fermant alors totalement le véhicule au dessus et à l'arrière de l'habitacle), et ladite position ouverte du hayon atteinte par déplacement, vis-à-vis au moins de la structure du véhicule, de l'intégralité de l'un au moins des dits panneaux supérieur et inférieur de hayon 151, 152, en tous points (glissement).

Dans l'exemple illustré, c'est avec la charnière décalée au bout des bras 19a et/ou 19b (axe de rotation 21a, 21b) que l'on obtient ce déplacement intégral, avec donc un mouvement de rotation autour d'au moins un axe situé à distance du panneau considéré, une autre solution ayant pu consister en un déplacement sur glissière(s) arqués (courbes) du (des) panneau(x) considéré(s) avec un décalage approprié entre le coulissement du hayon le long de ces glissières, pour son mouvement d'ouverture comme sur là figure 1, et le mouvement de basculement des panneaux de toit du premier groupe (300, 301, 302), de manière qu'on puisse atteindre le décalage axial (suivant l'axe 23) permettant le positionnement décalé en profondeur de la figure 4, avec les panneaux de toit du premier groupe devant le panneau de hayon 150.

Grâce au principe de coulissement expliqué ci avant les glissières 4, ainsi que du fait du principe de basculement des bras, les panneaux de toit 300, 301, 302 du premier groupe sont donc mobiles par rapport à la structure 9 du véhicule :
- d'une part, au-dessus de l'habitacle, 7, et suivant un chemin sensiblement horizontal, entre leur position de fermeture de la figure 1 où il s'étendent sensiblement dans un même plan, et une position d'ouverture intermédiaire (figure 2) dans laquelle ces panneaux de toit sont côte à côte, superposés les uns aux autres, à l'arrière de l'habitacle,
- et d'autre part, entre cette position d'ouverture intermédiaire et ladite position d'ouverture (pleine) de la figure 4 correspondant à une ouverture maximale du toit, dans laquelle ces panneaux 300, 301, 302 sont donc disposés côte à côte sensiblement verticalement à l'arrière du coffre arrière.

Bien entendu, l'utilisation des bras pivotants 19a, 19b pour le hayon et de préférence 45 pour l'élément du premier groupe de panneaux de toit qui entraîne les autres en basculement favorise la simplicité, l'efficacité et la fiabilité de la solution proposée.

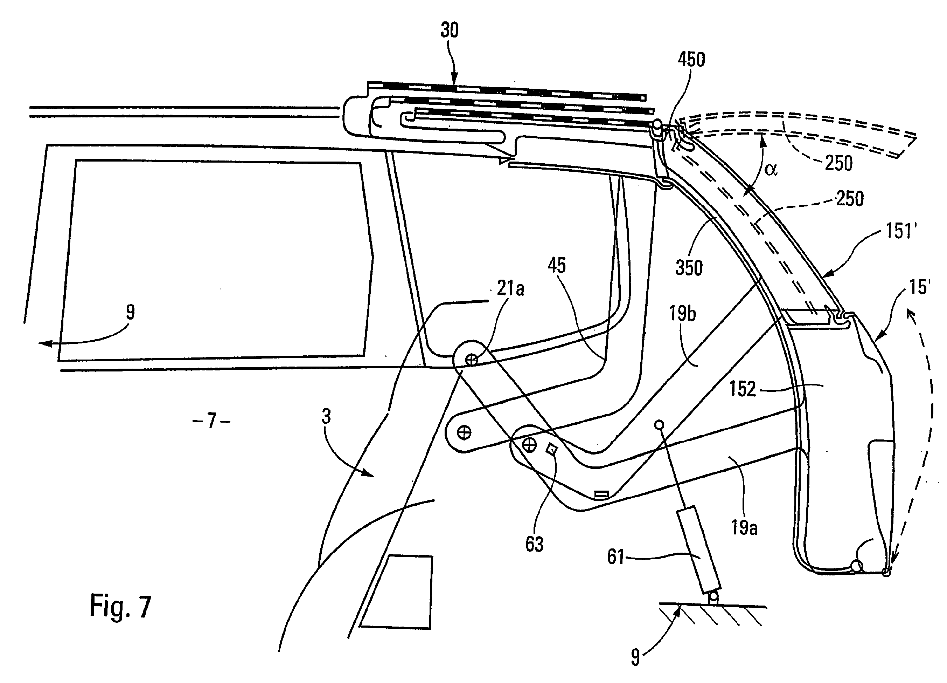

Dans le cas de la figure 7, on trouve un panneau supérieur de hayon (ou élément le plus à l'arrière du toit ouvrant) 151' conçu comme le panneau 151 définit avant, à ceci près que la vitre 250 qu'il présente (ou éventuellement toute cloison transparente ou non) est montée pivotante par rapport au hayon 15' (par ailleurs identique au hayon 15) dans son ensemble et en particulier par rapport à un encadrement périphérique 350 du panneau 151', autour d'un axe de charnière horizontal 450, de manière à pouvoir ouvrir d'un angle α la cloison ou vitre 250, alors que le hayon 15' est basculé vers sa position "fermée" sensiblement verticale.

Bien entendu, ceci n'empêche en rien le mouvement du hayon 15' dans son ensemble vers sa position ouverte de la figure 1, ni l'abaissement de la partie haute 151' au niveau du panneau inférieur 152, comme dans le cas de la figure 4.

A la place des bras 45, un système à glissières (moins approprié) aurait pu être prévu entre les parties 151 (151') et 152.

Il doit être clair que dans la position du hayon de la fig.4, les éléments de toit 300,301,302 peuvent être redressés horizontalement, les mouvements des deux groupes 15, 30 étant indépendants.

## Revendications

1. Dispositif de fermeture d'un véhicule comprenant une structure (9), un toit (30) et un coffre arrière, le dispositif comprenant un hayon arrière (15, 15') monté sur ce véhicule, le hayon comprenant:
- un panneau (150) pour fermer ou dégager une ouverture d'accès au coffre arrière (5) du véhicule, et
- des moyens (19a,19b) d'articulation pour articuler le hayon autour d'au moins un axe de rotation (21a,21b) sensiblement horizontal, entre une position fermée dans laquelle un accès au coffre est interdit et une position ouverte, dans laquelle le coffre arrière (5) est accessible, **caractérisé en ce que** les moyens (19a,19b) d'articulation comprennent des bras (19a,19b) qui pivotent par rapport à la structure (9) du véhicule autour dudit axe de rotation (21a,21b), lequel est situé à l'écart du panneau de hayon, créant ainsi une charnière décalée à l'écart du panneau (150), de telle sorte que, pour s'ouvrir ou se fermer, le panneau de hayon glisse par rapport à la structure (9) du véhicule, en étant basculé vers le dessus du véhicule en position ouverte, et ce panneau de hayon comprend une partie supérieure rigide (151, 151') et une partie inférieure rigide (152) mobiles l'une par rapport à l'autre, le hayon (15, 15') étant ainsi adapté pour occuper une position partiellement ouverte dans laquelle lesdites parties supérieure et inférieure (151, 151') se rapprochent en hauteur l'une de l'autre, pour libérer, au-dessus d'elles, un espace d'accès (200) à l'intérieur du véhicule.

2. Dispositif selon la revendication 1 **caractérisé en ce que**, en position fermée du hayon, le panneau (150) est disposé sensiblement verticalement et les bras (19a, 19b) sont coudés, de manière à présenter une convexité tournée vers le bas et sont liés au panneau (150) de hayon en des zones situées dans les trois quarts inférieurs dudit panneau.

3. Dispositif selon la revendication 1, **caractérisé en ce que** la partie supérieure (151, 151') et la partie inférieure (152) du panneau de hayon sont chacune liées aux dits bras d'articulation, lesquels bras (19a, 19b) sont différents pour la partie supérieure et pour la partie inférieure de hayon, de sorte que les moyens d'articulation comprennent des premiers bras (19a) reliés à ladite partie inférieure de hayon et des seconds bras (19b) reliés à ladite partie supérieure.

4. Dispositif selon la revendication 3, **caractérisée en ce que** les bras d'articulation (19b) liés à la partie supérieure de hayon et les bras d'articulation (19a) liés à la partie inférieure de hayon sont verrouillables entre eux (63), de manière sélective, pour être déplacés ensemble, dans état verrouillé de moyens de verrouillage (63), et pour être déplaçables indépendamment, dans un état déverrouillé de ces moyens de verrouillage.

5. Dispositif selon la revendication 3 ou 4, **caractérisé en ce que** seuls les bras (19b) d'articulation de la partie supérieure du panneau de hayon sont liés à un moyen de déplacement, tel qu'un vérin, pour l'ouverture ou la fermeture du hayon (15, 15').

6. Véhicule du type à hayon arrière comprenant une structure (9), un toit (30), un coffre arrière et un dispositif de fermeture selon l'une quelconque des revendications précédentes monté pivotant par rapport à ce toit par l'intermédiaire desdits moyens (19a,19b) d'articulation comprenant lesdits bras pivotants (19a,19b).

7. Véhicule à hayon arrière, comprenant une structure (9), un toit (30) ouvrant comprenant des panneaux mobiles escamotables (300, 301, 302), un coffre arrière et un dispositif de fermeture selon l'une quelconque des revendications 1 à 5 monté pivotant sur la structure (9) par l'intermédiaire desdits moyens (19a,19b) d'articulation comprenant les bras pivotants (19a, 19b) .

8. Véhicule selon la revendication 6 ou 7, **caractérisé en ce que** les bras (19a, 19b) d'articulation du hayon sont fixés à la structure (9) du véhicule à un niveau situé en dessous de celui de la limite inférieure (110) de vitres latérales du véhicule et/ou ces bras d'articulation du hayon sont articulés à la structure (9) du véhicule vers leur extrémité libre, dans une zone située à proximité du haut du dossier des sièges arrière (3a), derrière ce dossier.

9. Véhicule selon l'une quelconque des revendications 6 à 8, **caractérisé en ce qu'**il présente un habitacle et le toit est un toit ouvrant comprenant des, ou lesdits, panneaux mobiles (300, 301, 302) adaptés pour un déplacement les uns par rapport aux autres entre un état fermé du toit dans lequel les panneaux s'étendent sensiblement les uns derrière les autres, au dessus de l'habitacle, et une position ouverte dans laquelle au moins deux de ces panneaux de toit sont sensiblement côte à côte, ces panneaux de toit et le hayon (15, 15') étant adaptés pour que dans l'état sensiblement côte à côte des panneaux de toit, le hayon puisse basculer entre ses positions ouverte et fermée en passant par dessus lesdits panneaux de toit.

10. Véhicule selon la revendication 7 ou 9, **caractérisé en ce que** l'un au moins des panneaux mobiles (300, 301, 302) de toit est lié à au moins un bras additionnel (45) articulé par rapport à la structure (9) du véhicule suivant un axe sensiblement horizontal, de manière que ces panneaux mobiles de toit, liés ensemble pivotent entre une position basculée vers le haut du véhicule et vers l'horizontale et une position escamotée, sensiblement verticale, située vers l'arrière du coffre du véhicule, lesdits panneaux sensiblement côte à côte étant alors disposés sensiblement en face du hayon arrière (15, 15') extérieur en position fermée.

11. Véhicule selon l'une des revendications 7 ou 9 ou 10, **caractérisé en ce qu'**en position escamotée sensiblement verticale, les panneaux déplacés vers l'arrière sensiblement côte, à côte (300, 301, 302) du toit ouvrant sont alors disposés vers l'arrière du coffre (5), sensiblement en face du hayon arrière (15, 15') extérieur, lequel est alors dans une position sensiblement verticale.

12. Véhicule selon l'une quelconque des revendications 7 à 11, **caractérisé en ce que** lesdits panneaux (300, 301, 302) de toit ouvrant sont montés pour être déplaçables vers une position sensiblement verticale, basse, basculée vers l'arrière du véhicule, où ils sont alors disposés sensiblement côte à, côte et en face du hayon arrière (15, 15') extérieur, lui-même en position sensiblement verticale basse, avec sa partie supérieure (151, 151') escamotée vers sa dite partie inférieure (152), la limite haute (L) du panneau de hayon étant alors située sensiblement au niveau de l'extrémité supérieure des dits panneaux de toit ouvrant, ce niveau d'élévation étant à proximité de la limite basse (110) de vitres latérales du véhicule.

## Claims

1. Closure device for a vehicle comprising a structure (9), a roof (30) and a rear boot, the device comprising a rear tailgate (15, 15') mounted on this vehicle, the tailgate comprising:
- a panel (150) for closing or freeing an opening for access to the rear boot (5) of the vehicle, and
- means (19a, 19b) of articulation for articulating the tailgate about at least one substantially horizontal axis of rotation (21a, 21b), between a closed position in which an access to the boot is barred and an open position, in which the rear boot (5) can be accessed, **characterized in that** the means (19a, 19b) of articulation comprise arms (19a, 19b) which pivot relative to the structure (9) of the vehicle about the said axis of rotation (21a, 21b), which is situated at a distance from the tailgate panel, thus creating an offset hinge at a distance from the panel (150), so that, to open or close, the tailgate panel slides relative to the structure (9) of the vehicle, while being tilted towards the top of the vehicle in the open position, and this tailgate panel comprises a rigid upper portion (151, 151') and a rigid lower portion (152) that can be moved relative to one another, the tailgate (15, 15') thereby being suitable for occupying a partially open position in which the said upper and lower portions (151, 151') come closer in height to one another, in order to release, above them, a space (200) for access to the inside of the vehicle.

2. Device according to Claim 1, **characterized in that**, in the closed position of the tailgate, the panel (150) is placed substantially vertically and the arms (19a, 19b) are bent, so as to have a convexity turned downwards, and are connected to the tailgate panel (150) in zones situated in the lower three-quarters of the said panel.

3. Device according to Claim 1, **characterized in that** the upper portion (151, 151') and the lower portion (152) of the tailgate panel are each connected to the said articulation arms, which arms (19a, 19b) are different for the upper tailgate portion and for the lower tailgate portion, so that the articulation means comprise first arms (19a) connected to the said lower tailgate portion and second arms (19b) connected to the said upper portion.

4. Device according to Claim 3, **characterized in that** the articulation arms (19b) connected to the upper tailgate portion and the articulation arms (19a) connected to the lower tailgate portion can be locked together (63) in a selective manner in order to be moved together, in the locked state of the locking means (63), and in order to be movable independently in an unlocked state of these locking means.

5. Device according to Claim 3 or 4, **characterized in that** only the articulation arms (19b) of the upper portion of the tailgate panel are connected to a movement means, such as a cylinder, for the opening or closing of the tailgate (15, 15').

6. Vehicle of the rear tailgate type comprising a structure (9), a roof (30), a rear boot and a closure device according to any one of the preceding claims, mounted so as to pivot relative to this roof by means of the said means (19a, 19b) of articulation comprising the said pivoting arms (19a, 19b).

7. Vehicle with rear tailgate, comprising a structure (9), a sunroof (30) comprising retractable movable panels (300, 301, 302), a rear boot and a closure device according to any one of Claims 1 to 5, mounted so as to pivot on the structure (9) by means of the said means (19a, 19b) of articulation comprising the pivoting arms (19a, 19b).

8. Vehicle according to Claim 6 or 7, **characterized in that** the articulation arms (19a, 19b) of the tailgate are attached to the structure (9) of the vehicle at a level situated beneath that of the lower limit (110) of side windows of the vehicle and/or these articulation arms of the tailgate are articulated on the structure (9) of the vehicle towards their free end, in a zone situated close to the top of the backrest of the rear seats (3a), behind this backrest.

9. Vehicle according to any one of Claims 6 to 8, **characterized in that** it has a passenger compartment and the roof is a sunroof comprising some, or the said, movable panels (300, 301, 302) suitable for a movement relative to one another between a closed state of the roof in which the panels extend substantially one behind another, above the passenger compartment, and an open position in which at least two of these roof panels are substantially side-by-side, these roof panels and the tailgate (15, 15') being adapted so that, in the substantially side-by-side state of the roof panels, the tailgate can tilt between its open and closed positions while passing over the said roof panels.

10. Vehicle according to Claim 7 or 9, **characterized in that** at least one of the movable roof panels (300, 301, 302) is connected to at least one additional arm (45) articulated relative to the structure (9) of the vehicle along a substantially horizontal axis, so that these movable roof panels, connected together, pivot between a position tilted towards the top of the vehicle and towards the horizontal and a retracted position, substantially vertical, situated towards the rear of the boot of the vehicle, the said substantially side-by-side panels then being placed substantially facing the external rear tailgate (15, 15') in the closed position.

11. Vehicle according to one of Claims 7 or 9 or 10, **characterized in that**, in the substantially vertical retracted position, the panels moved towards the rear substantially side-by-side (300, 301, 302) of the sunroof are then placed towards the rear of the boot (5), substantially facing the external rear tailgate (15, 15'), which is then in a substantially vertical position.

12. Vehicle according to any one of Claims 7 to 11, **characterized in that** the said sunroof panels (300, 301, 302) are mounted so as to be able to be moved to a substantially vertical, bottom position, tilted towards the rear of the vehicle, where they are then placed substantially side-by-side and facing the external rear tailgate (15, 15'), itself in a substantially vertical, bottom position, with its upper portion (151, 151') retracted towards its said lower portion (152), the top limit (L) of the tailgate panel then being situated substantially level with the upper end of the said sunroof panels, this level of elevation being close to the bottom limit (110) of side windows of the vehicle.

## Patentansprüche

1. Schließvorrichtung eines Fahrzeugs mit einer Karosserie (9), einem Dach (30) und einem heckseitigen Kofferraum, wobei die Vorrichtung eine Heckklappe (15, 15') umfasst, die an das Fahrzeug montiert ist, wobei die Heckklappe umfasst:
- eine Platte (150) zum Verschließen oder Freigeben einer Zugriffsöffnung auf den heckseitigen Kofferraum (5) des Fahrzeugs, und
- eine Gelenkeinrichtung (19a, 19b), um die Heckklappe um eine im Wesentlichen horizontale Drehachse (21a, 21b), zwischen einer Schließposition, in welcher ein Zugriff auf den Kofferraum verhindert wird, und einer Öffnungsposition, in welcher der heckseitige Kofferraum (5) zugänglich ist, zu schwenken, **dadurch gekennzeichnet, dass** die Gelenkeinrichtung (19a, 19b) Arme (19a, 19b) umfasst, die in Bezug zu der Karosserie (9) des Fahrzeugs um die Drehachse (21a, 21b) schwenken, die in Abstand von der Platte der Heckklappe angeordnet ist, was so ein in Abstand zur Platte (150) versetztes Scharnier erzeugt, derart, dass, um sich zu öffnen oder zu schließen, die Platte der Heckplatte in Bezug zur Struktur (9) des Fahrzeugs gleitet und sich dabei zur Oberseite des Fahrzeugs in die Öffnungsposition schwenkt, und diese Heckklappenplatte einen steifen oberen Bereich (151, 151') und einen steifen unteren Bereich (152) umfasst, die zueinander beweglich sind, wobei die Heckklappe (15, 15') so ausgebildet ist, dass sie eine teilweise Öffnungsposition einnehmen kann, in welcher der obere und untere Bereich (151, 151') sich in ihrer Höhenlage annähern, um oberhalb derselben einen Zugriffsraum (200) zum Inneren des Fahrzeugs freizugeben.

2. Vorrichtung nach Anspruch 1, **dadurch gekennzeichnet, dass** in der Schließposition der Heckklappe die Platte (150) im Wesentlichen vertikal angeordnet ist und die Arme (19a, 19b) gekrümmt sind, so dass sie eine nach unten gerichtete Konvexität haben und mit der Platte (150) der Heckklappe in Bereichen verbunden sind, die in den unteren Dreivierteln der Platte liegen.

3. Vorrichtung nach Anspruch 1, **dadurch gekennzeichnet, dass** der obere Bereich (151, 151') und der untere Bereich (152) der Heckklappenplatte jeweils mit den Gelenkarmen verbunden sind, diese Arme (19a, 19b) für den oberen Bereich und für den unteren Bereich der Heckklappe unterschiedlich sind, derart, dass die Gelenkeinrichtung erste Arme (19a) umfasst, die mit dem unteren Bereich der Heckklappe verbunden sind und zweite Arme (19b), die mit dem oberen Bereich verbunden sind.

4. Vorrichtung nach Anspruch 3, **dadurch gekennzeichnet, dass** die Gelenkarme (19b), die mit dem oberen Bereich der Heckklappe verbunden sind und die Gelenkarme (19a), die mit dem unteren Bereich der Heckklappe verbunden sind, untereinander (63) wahlfrei verriegelbar sind, um im verriegelten Zustand der Verriegelungseinrichtung (63) zusammen verstellt werden zu können und um im entriegelten Zustand dieser Verriegelungseinrichtung unabhängig verstellt werden zu können.

5. Vorrichtung nach Anspruch 3 oder 4, **dadurch gekennzeichnet, dass** nur die Gelenkarme (19b) des oberen Bereichs der Platte der Heckklappe mit einer Verstelleinrichtung verbunden sind, wie einem Zylinder, um die Heckklappe (15, 15') zu öffnen oder zu schließen.

6. Fahrzeug in der Bauweise mit Heckklappe umfassend eine Karosserie (9), ein Dach (30), einen heckseitigen Kofferraum und eine Schließeinrichtung nach einem der vorhergehenden Ansprüche, die in Bezug zu dem Dach mittels einer Gelenkeinrichtung (19a, 19b) umfassend die Schwenkarme (19a, 19b) schwenkend angebracht ist.

7. Fahrzeug mit Heckklappe, umfassend eine Karosserie (9), ein öffnendes Dach (30) mit beweglichen versenkbaren Platten (300, 301, 302), einem heckseitigen Kofferraum und einer Schließeinrichtung nach einem der Ansprüche 1 bis 5, die auf der Karosserie (9) mittels der Gelenkeinrichtung (19a, 19b) umfassend die Schwenkarme (19a, 19b) schwenkend montiert ist.

8. Fahrzeug nach Anspruch 6 oder 7, **dadurch gekennzeichnet, dass** die Gelenkarme (19a, 19b) der Heckklappe an der Karosserie (9) des Fahrzeugs an einem Niveau befestigt sind, das unterhalb desjenigen der unteren Begrenzung (110) der Seitenscheiben des Fahrzeugs liegt und/oder diese Gelenkarme der Heckklappe an der Karosserie (9) des Fahrzeugs in Richtung ihres freien Endes in einer Zone angelenkt sind, die in der Nähe der Höhe der Rückenlehne der Rücksitze (3a), hinter dieser Rücklehne liegt.

9. Fahrzeug nach einem der Ansprüche 6 bis 8, **dadurch gekennzeichnet, dass** dieses eine Fahrgastzelle umfasst und das Dach ein sich öffnendes Dach ist, das diese oder andere bewegliche Platten (300, 301, 302) umfasst, die so ausgebildet sind, dass sie sich zueinander zwischen einem Schließzustand des Daches, in welchem sich die Platten im Wesentlichen oberhalb der Fahrgastzelle hintereinander erstrecken, und einer Öffnungsposition, in welcher wenigstens zwei dieser Dachplatten im Wesentlichen nebeneinander liegen, verschoben werden können, wobei diese Dachplatten und die Heckklappe (15, 15') so ausgebildet sind, dass die Heckklappe in dem im Wesentlichen nebeneinander liegenden Zustand der Dachplatten zwischen deren Öffnungs- und Schließpositionen schwenken kann und die Dachplatten von oben passiert.

10. Fahrzeug nach Anspruch 7 oder 9, **dadurch gekennzeichnet, dass** wenigstens eine der beweglichen Platten (300, 301, 302) des Daches mit wenigstens einem zusätzlichen Arm (45) verbunden ist, der in Bezug zu der Karosserie (9) des Fahrzeugs an einer im Wesentlichen horizontalen Achse angelenkt ist, derart, dass diese beweglichen Platten des Daches zusammen verbunden sind und zwischen einer Position, die zur Oberseite des Fahrzeugs und zur Horizontalen gekippt ist, und einer im Wesentlichen vertikalen, versenkten Position, die zur Heckseite des Kofferraums des Fahrzeugs liegt, schwenken, wobei die im Wesentlichen nebeneinander liegenden Platten dann im Wesentlichen gegenüber der äußeren Heckklappe (15, 15') in Schließposition angeordnet sind.

11. Fahrzeug nach einem der Ansprüche 7 oder 9 oder 10, **dadurch gekennzeichnet, dass** in der im Wesentlichen vertikalen versenkten Position die zur Heckseite verschobenen im Wesentlichen nebeneinander liegenden Platten (300, 301, 302) des sich öffnenden Daches dann zur Heckseite des Kofferraums (5) angeordnet sind, im Wesentlichen gegenüber der äußeren Heckklappe (15, 15'), die sich dann in einer im Wesentlichen vertikalen Position befindet.

12. Fahrzeug nach einem der Ansprüche 7 bis 11, **dadurch gekennzeichnet, dass** die Platten (300, 301, 302) des sich öffnenden Daches so montiert sind, dass sie in eine im Wesentlichen vertikale, tiefe Position verschiebbar sind, die zur Heckseite des Fahrzeugs gekippt ist, in der sie dann im Wesentlichen nebeneinander und gegenüber der äußeren Heckklappe (15, 15') angeordnet sind, die sich selbst in einer im Wesentlichen tiefen vertikalen Position befindet, wobei ihr oberer Bereich (151, 151') zu dem unteren Bereich (152) hin versenkt ist, wobei die obere Grenze (L) der Platte der Heckklappe dann im Wesentlichen am unteren Ende der Platten des sich öffnenden Daches liegen, wobei dieses Niveau in Ansicht in der Nähe der unteren Grenze (110) der Seitenfenster des Fahrzeugs liegt.
